# FASCICULE DE BREVET EUROPEEN

(11) **EP 1 174 969 B1**
(45) Date de publication et mention de la délivrance du brevet: **09.04.2003**
(21) Numéro de dépôt: 01440229.1
(22) Date de dépôt: 18.07.2001
(51) Int. Cl.: H02G 1/12

(54) **Pince à denuder**
Abisolierzange
Stripping pliers

(30) Priorité: 19.07.2000 FR 0009445
(43) Date de publication de la demande: 23.01.2002
(73) Titulaire: Techniques Modernes Alsaciennes T.M.A. S.A., 68300 Saint-Louis (FR)
(72) Inventeur: Letzelter, Valère, 68200 Mulhouse (FR)
(74) Mandataire: Nithardt, Roland

(56) Documents cités:
- FR-A- 2 166 306
- US-A- 2 523 936
- US-A- 3 177 741

## Description

La présente invention concerne une pince à dénuder les câbles électriques comportant une paire de poignées divergentes et une paire de mâchoires adjacentes, les poignées et les mâchoires étant articulées à leur point de convergence autour d'un axe de manière à écarter les mâchoires quand les poignées sont rapprochées et inversement pour replacer la pince dans sa position initiale, une des mâchoires comportant un serre-câble mobile et l'autre mâchoire comportant un couteau mobile, le serre-câble et le couteau mobiles étant guidés en translation dans leur mâchoire respective entre une position ouverte et une position fermée et reliés à leur poignée respective au moyen d'une biellette articulée, les poignées et les mâchoires étant rappelées en position initiale respectivement par un ressort de compression et un ressort de torsion, ladite pince comportant également des moyens de blocage des mâchoires en position écartée tant que le serre-câble et le couteau mobiles ne sont pas revenus en position ouverte.

Ce type de pince à dénuder est bien connu des électriciens et est utilisée depuis une cinquantaine d'années. Elle a fait l'objet d'un brevet américain US 2,523,936 délivré en 1950 et depuis n'a pas évolué techniquement. Les inconvénients rencontrés avec cette pince sont divers. La course d'écartement des mâchoires n'est pas réglable, donc la longueur de dénudage est fixe. Les moyens de blocage des mâchoires en position écartée comportent un cliquet articulé sur une mâchoire et coopérant avec un doigt solidaire de l'autre mâchoire, ce cliquet étant sollicité par un ressort spécifique pour se verrouiller sur le doigt à la fin de la course d'écartement des mâchoires. L'extrémité libre du cliquet est agencée pour s'appuyer sur la poignée correspondante qui provoque le déverrouillage du cliquet autorisant le retour des mâchoires en position initiale grâce au ressort de rappel des mâchoires. Ce système de cliquet est fragile et non fiable dans le temps. Des jeux parasites sont générés par une usure prématurée due aux frottements entre le cliquet et la poignée. De plus, le ressort de rappel des mâchoires, qui est constitué d'un ressort de torsion positionné à l'arrière de la pince coaxialement à l'axe d'articulation, est très contraint, ce qui peut causer une rupture prématurée de ce ressort. Enfin, les parties composantes de la pince sont des pièces de fonderie dans lesquelles sont incluses des petites pièces utilisées pour les liaisons techniques. Donc, ces pièces comportent des zones de plus faible épaisseur formant des amorces de rupture. Les chocs encaissés par ces pièces lors du retour des mâchoires en position initiale sont tels qu'ils induisent des fissures dans ces zones de rupture pouvant provoquer des casses prématurées. De plus, la pince actuelle n'a fait l'objet d'aucune étude esthétique ni ergonomique.

Le but de l'invention est de proposer une évolution technique de cette pince à dénuder pour augmenter sa résistance mécanique, réduire les efforts à appliquer, augmenter ses possibilités de dénudage et améliorer son esthétique, tout en réduisant son coût par l'utilisation des matières techniques nouvelles.

Ce but est atteint par une pince à dénuder telle que définie en préambule et caractérisée en ce qu'une des mâchoires est agencée pour être mobile en translation par rapport à l'autre mâchoire et en ce que lesdits moyens de blocage comportent au moins une liaison par came entre les deux mâchoires et une butée radiale, la liaison par came étant agencée pour déplacer en translation ladite mâchoire mobile quand les deux mâchoires sont en position écartée et la butée radiale étant agencée pour bloquer lesdites mâchoires en position écartée.

Dans une forme de réalisation préférée de l'invention, la liaison par came comporte au moins une rainure à came prévue dans une des mâchoires agencée pour recevoir un doigt suiveur solidaire de l'autre mâchoire et la mâchoire mobile en translation comporte un trou oblong pour le passage dudit axe d'articulation.

La rainure à came peut comporter deux tronçons, un tronçon circulaire s'étendant sur un secteur angulaire centré sur l'axe d'articulation et correspondant au début de la course d'écartement des mâchoires, suivi d'un tronçon coudé s'éloignant dudit axe d'articulation et correspondant à la fin de la course d'écartement des mâchoires et au déplacement en translation de ladite mâchoire mobile.

D'une manière préférentielle, la butée radiale est agencée pour coopérer avec ledit doigt suiveur, intégrée à la liaison par came et constituée par une paroi radiale dudit tronçon coudé située dans un plan passant par l'axe d'articulation.

Dans la forme de réalisation préférée de l'invention, le doigt suiveur est solidaire de la mâchoire fixe en translation, parallèle audit axe d'articulation et agencé pour être mobile en translation par rapport à cette mâchoire de manière à pouvoir modifier sa position dans ladite rainure à came et régler la course des mâchoires afin de proposer plusieurs longueurs de dénudage total ou partiel.

Dans ce cas, la mâchoire fixe en translation comporte au moins une lumière dans laquelle est monté ledit doigt suiveur, cette lumière s'étendant sur un secteur de longueur sensiblement égal à celle du tronçon circulaire de la rainure à came.

Le doigt suiveur peut être constitué d'une tige traversant de part en part ladite mâchoire fixe en translation, cette tige ayant une longueur supérieure à l'épaisseur de cette mâchoire et étant agencée pour se déplacer axialement par rapport à cette mâchoire.

Selon le mode de réalisation préféré, le doigt suiveur comporte à ses extrémités une tête et un bouton, un ressort de rappel étant disposé coaxialement à ladite tige entre ladite mâchoire et le bouton.

D'une manière avantageuse, la mâchoire fixe en translation comporte au moins une première empreinte pour recevoir ladite tête ou le bouton du doigt suiveur, cette première empreinte étant agencée pour définir une première position fixe dudit doigt suiveur par rapport à ladite rainure à came, cette première position fixe correspondant à la course totale des mâchoires pour dénuder un câble électrique.

De préférence, la mâchoire fixe en translation comporte au moins une deuxième empreinte distante de la première d'un entraxe au plus égal à celui de la lumière dans laquelle circule ledit doigt suiveur, cette deuxième empreinte définissant une deuxième position fixe du doigt suiveur par rapport à ladite rainure à came correspondant à une course partielle des mâchoires pour dénuder partiellement un câble électrique.

Dans une variante de réalisation, le doigt suiveur peut être décalé axialement par rapport à sa tête et son bouton de sorte qu'une rotation sur lui-même d'un angle α, quand il est placé dans au moins une des deux positions fixes, crée au moins une troisième position fixe du doigt suiveur par rapport à ladite rainure à came correspondant à une autre course partielle desdites mâchoires.

Pour faciliter l'utilisation de cette pince, la tête du doigt suiveur peut comporter un téton saillant et la mâchoire fixe en translation peut comporter au moins deux encoches pour recevoir ledit téton et correspondant au moins auxdites deux positions fixes.

De plus, cette pince à dénuder peut comporter un plastron agencé pour terminer esthétiquement l'avant de la pince en se superposant à l'axe d'articulation, au doigt suiveur et au ressort de torsion de rappel des mâchoires. Ce plastron peut avantageusement comporter une empreinte oblongue pour recevoir ledit bouton et des repères coopérant avec un repère prévu sur ce bouton pour repérer lesdites positions fixes dudit doigt suiveur et lesdites longueurs de dénudage possibles avec ladite pince.

La présente invention et ses avantages seront mieux compris dans la description suivante d'une forme de réalisation donnée à titre d'exemple non limitatif et en référence aux dessins annexés, dans lesquels :
- la figure 1 est une vue de face de la pince à dénuder selon l'invention,
- la figure 2 est une vue de dos de la pince de la figure 1,
- la figure 3 est une vue de côté de la pince en coupe partielle suivant la ligne III-III de la figure 1,
- les figures 4A à 4D sont des vues partielles de face et en coupe suivant la ligne IV-IV de la figure 3 de la pince réglée dans une position de course totale, respectivement en position initiale mâchoires fermées, en position écartée mâchoires fermées, en position écartée mâchoires ouvertes et en position initiale mâchoires ouvertes,
- les figures SA à 5D sont des vues similaires aux figures 4A à 4D de la pince réglée dans une position de course partielle courte pour réaliser un dénudage partiel, et
- les figures 6A à 6D sont des vues de détail du dispositif de réglage de la course de la pince respectivement de face et de dos en position de course totale, puis de face en position de course partielle courte et en position de course partielle longue.

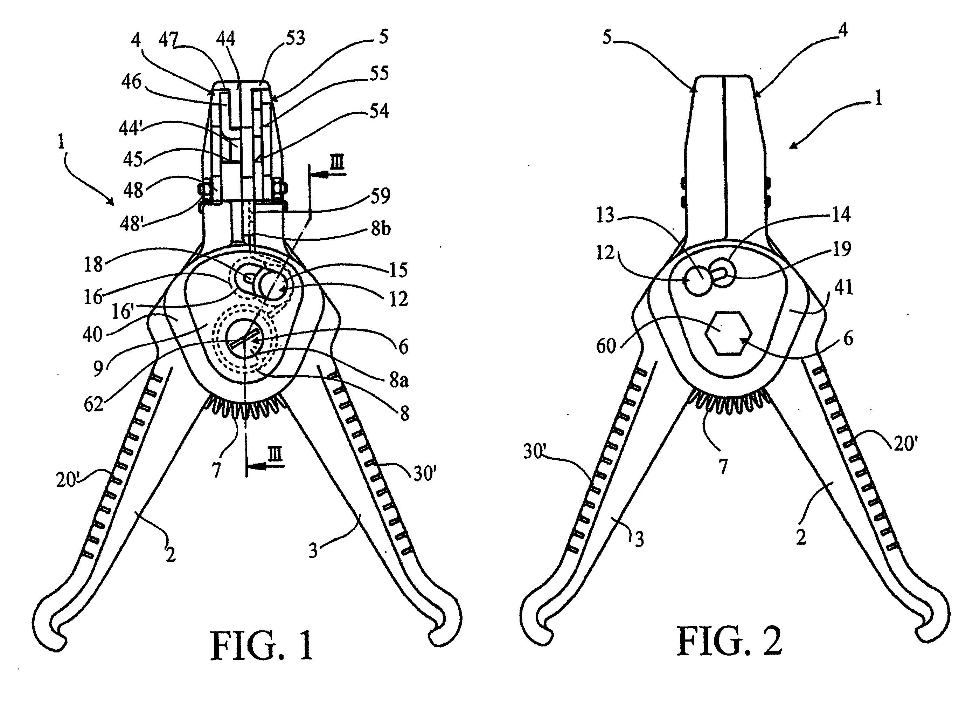

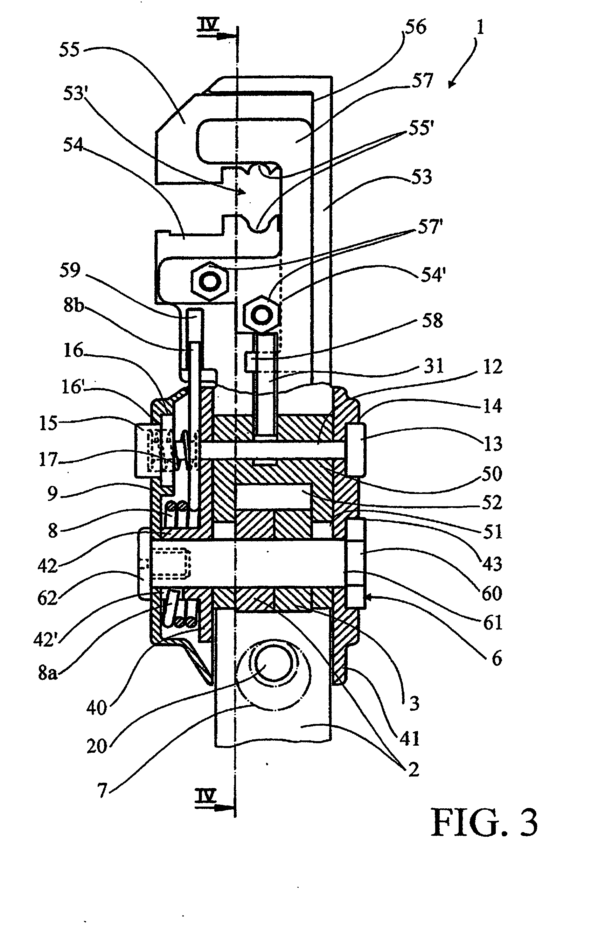

En référence aux figures 1 et 2, la pince à dénuder 1 selon l'invention est représentée en position initiale ou position de repos respectivement en vues de face et de dos. Elle comporte une paire de poignées 2, 3 divergentes et une paire de mâchoires 4, 5 adjacentes. Les poignées 2, 3 et les mâchoires 4, 5 sont articulées à leur point de convergence autour d'un axe 6. En position initiale, les mâchoires 4, sont parallèles, se font face et sont en appui plan. Elles sont sollicitées, dans cette position initiale, par un ressort de torsion 8 disposé à l'avant coaxialement à l'axe d'articulation 6 à l'arrière d'un plastron de finition 9. Ce ressort de torsion 8 comporte deux extrémités libres 8a, 8b chacune en appui sur une mâchoire 4, 5 pour les ramener l'une vers l'autre. En position initiale, les poignées 2, 3 sont divergentes et sont sollicitées, dans cette position initiale, par un ressort de compression 7 disposé radialement sous l'axe d'articulation 6. Les extrémités de ce ressort 7 sont maintenues par deux bossages 20, 30 (fig. 3) prévus en correspondance sur les poignées 2, 3. Les poignées 2, 3 comportent, par ailleurs, un crantage extérieur 20', 30' favorisant la préhension sans glissement de la main de l'homme.

En référence à la figure 3, la mâchoire 4, située à gauche sur les figures 1, 4 et 5, comporte, en partie inférieure, deux joues parallèles, une joue avant 40 et une joue arrière 41, formant une chape et comportant un alésage pour recevoir l'axe d'articulation 6. La joue avant 40 comporte, autour de son alésage, un bossage 42 sur lequel est monté le ressort de torsion 8. L'extrémité 8a de ce ressort est logée dans un évidement 42' correspondant prévu dans ce bossage 42. La joue arrière 41 comporté un logement hexagonal 43 pour recevoir la tête hexagonale 60 de la tige 61 formant l'axe d'articulation 6. Cette tige 61 est bloquée axialement par une vis 62 vissée dans un trou fileté à l'extrémité libre de cette tige à l'avant du plastron 9.

Cette mâchoire 4 comporte, en partie supérieure, une tête 44 en forme de C définissant un passage 44' pour le câble électrique à dénuder, la base du C formant une surface crantée 45 fixe. Les crans sont orientés perpendiculairement au sens d'introduction du câble. Elle comporte également un serre-câble mobile 46 monté coulissant dans une rainure 47 délimitée par une paroi latérale de la tête 44 et un guide 48 rapporté sur la tête 44 par des vis 48'. Le serre-câble mobile 46 comporte une surface d'appui moletée 46' en regard de la surface crantée 45.

Le serre-câble mobile 46 est entraîné en translation vers le bas par une biellette 21 solidaire, à une de ses extrémités, du serre-câble mobile 46 par un doigt 49 et articulée à l'autre extrémité sur la poignée 2 autour d'un pivot 22. La poignée 2 présente, dans cette zone, deux extrémités divergentes, une extrémité 23 articulée sur l'axe 6 et une extrémité 24 pourvue du pivot 22.

La mâchoire 5, située à droite sur les figures 1, 4 et 5, comporte, un tronçon inférieur 50 guidé en rotation entre les joues 40, 41 de la mâchoire 4 et pourvu d'un alésage 51 pour le passage de l'axe d'articulation 6, cet alésage ayant une forme oblongue pour autoriser un déplacement en translation de la mâchoire 5 par rapport à la mâchoire 4, comme expliqué plus loin. Ce tronçon inférieur 50 comporte un passage central ouvert 52, formant une chape pour recevoir les extrémités 23, 33 des poignées 2, 3 traversées par ledit axe d'articulation 6.

Cette mâchoire 5 comporte, en partie supérieure, une tête 53 en forme de C définissant un passage 53' pour le câble électrique à dénuder, la base du C comportant un couteau fixe 54 orienté perpendiculairement au sens d'introduction du câble. Elle comporte également un couteau mobile 55, en regard du couteau fixe 54, monté coulissant dans une rainure 56 délimitée par deux parois perpendiculaires de la tête 53, la face arrière 54' du couteau fixe 54, cette rainure étant fermée par un guide 57 rapporté sur la tête 53 par des vis 57'. Le couteau mobile 55 comporte un profil complémentaire à celui du couteau fixe 54, ces profils délimitant au moins une encoche circulaire 55' correspondant à un diamètre de câble électrique.

Le couteau mobile 55 est entraîné en translation vers le bas par une biellette 31 solidaire à une de ses extrémités du couteau mobile 55 par un doigt 58 et articulée à l'autre extrémité sur la poignée 3 autour d'un pivot 32. La poignée 3 présente, dans cette zone, deux extrémités divergentes, une extrémité 33 articulée sur l'axe 6 et une extrémité 34 pourvue du pivot 32.

La mâchoire 5 comporte encore un logement 59 ménagé dans sa tête 53 et apte à recevoir la deuxième extrémité libre 8b du ressort de torsion 8 de rappel des mâchoires. Ce logement 59 est orienté perpendiculairement à l'axe d'articulation 6 et est suffisamment profond pour autoriser le déplacement en translation de la mâchoire 5 par rapport à la mâchoire 4.

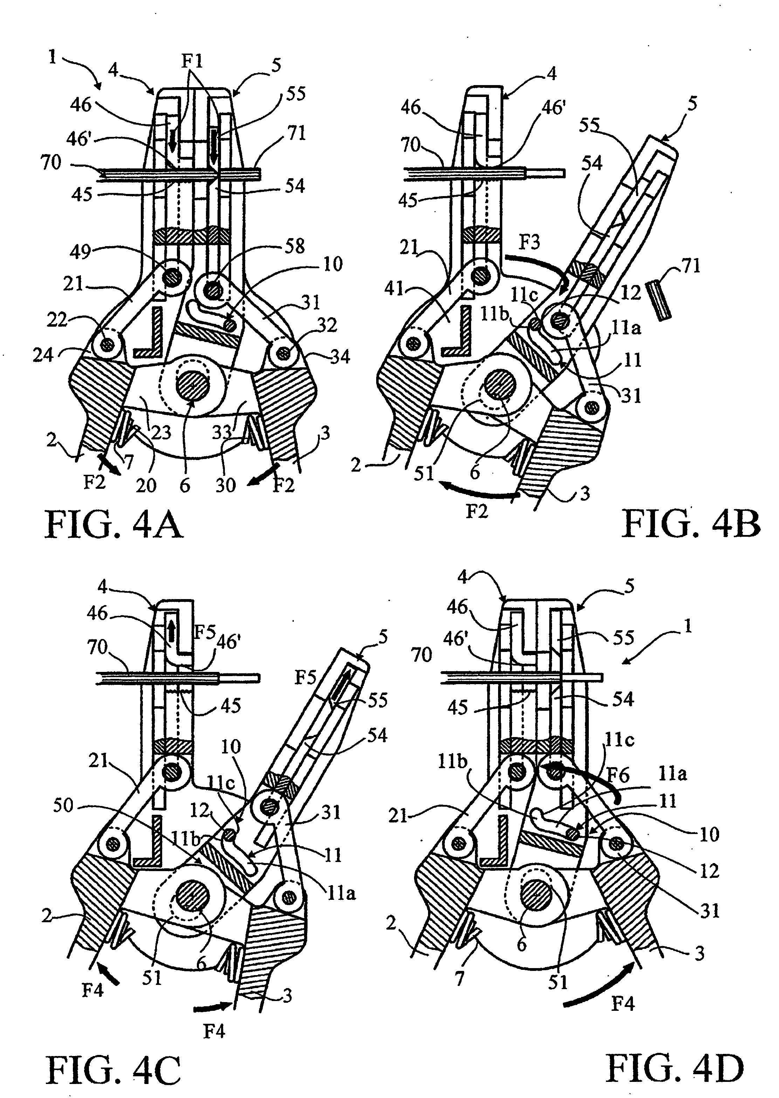

En référence aux figures 4A à 4D, la pince à dénuder 1 selon l'invention comporte des moyens de blocage 10 des mâchoires 4, 5 en position écartée. Ces moyens de blocage 10 comportent une liaison par came pourvue d'une rainure à came 11 ménagée dans le tronçon inférieur 50 de la mâchoire 5, cette rainure à came 11 recevant un doigt suiveur 12 solidaire des joues 40, 41 de la mâchoire 4. La rainure à came 11 comporte deux tronçons, un tronçon circulaire 11a s'étendant sur un secteur angulaire centré sur l'axe d'articulation 6 et correspondant au début de la course d'écartement des mâchoires 4, 5, suivi d'un tronçon coudé 11b s'éloignant dudit axe d'articulation 6 et correspondant à la fin de la course d'écartement des mâchoires 4, 5. Ce tronçon coudé 11b comporte une paroi radiale située dans un plan passant par l'axe d'articulation 6 et définissant une butée radiale 11c pour le doigt suiveur 12.

Le fonctionnement de la pince à dénuder 1 selon l'invention est décrit en référence aux figures 4A à 4D. Dans la figure 4A, un câble électrique 70 à dénuder a été introduit dans les mâchoires 4 et 5 et le serre-câble mobile 46 et le couteau mobile 55 ont été translatés vers le bas suivant les flèches F1 pour serrer le câble 70 et couper la gaine isolante 71 de ce câble. Ces deux mouvements de translation sont générés par le pivotement des poignées 2, 3 suivant les flèches F2 autour de l'axe d'articulation 6 sous un effort de serrage exercé par un opérateur et par les biellettes 21, 31 qui transforment ce mouvement de rotation des poignées en un mouvement de translation des serre-câble 46 et couteau 55 mobiles.

En poursuivant l'effort de serrage sur les poignées 2, 3 suivant la flèche F2, l'opérateur génère l'écartement des mâchoires 4, 5. Le serre-câble mobile 46 et le couteau mobile 55 étant en butée, les mâchoires 4, 5 sont solidaires des poignées 2, 3 et entraînées avec elles dans leur mouvement de rotation. La pince à dénuder 1 est illustrée dans cette position par la figure 4B. L'écartement des mâchoires 4, 5 est suffisant pour dénuder l'extrémité du câble 70, les couteaux 54, 55 retirant l'extrémité de la gaine isolante 71 coupée. Pendant la course des mâchoires 4, 5, le doigt suiveur 12 circule d'abord dans le tronçon circulaire 11a de la rainure à came 11 centré sur l'axe 6, qui n'a pas d'effet, puis dans le tronçon coudé 11b, qui provoque le déplacement en translation en direction de l'axe 6 de la mâchoire 5 suivant la flèche F3. Le doigt suiveur 12 entre alors en contact avec le fond de la rainure à came 11 qui limite sa course. Puis quand les poignées 2, sont relâchées, le doigt suiveur 12 vient en appui sur la butée radiale 11c, sous l'effet des ressorts 7, 8, qui empêche le retour des mâchoires 4, 5 en position initiale.

Pendant cette phase de blocage des mâchoires 4, 5 en position écartée, si l'opérateur relâche les poignées 2, 3, elles pivotent en sens inverse suivant la flèche F4 autour de l'axe 6 sous l'action du ressort de compression 7 et provoquent la remontée du serre-câble mobile 46 et du couteau mobile 55 suivant les flèches F5 par l'intermédiaire des biellettes 21 et 31. Cette position est illustrée par la figure 4C.

Le couteau mobile 55 revient en position initiale, en butée et devient solidaire de la poignée 3 qui, en poursuivant sa rotation suivant F4, provoque le déplacement en translation de la mâchoire 5 par rapport à la mâchoire 4 suivant la flèche F6 et dégage le doigt suiveur 12 de la butée radiale 11c. A partir de ce moment, le ressort de torsion 8 provoque le retour en position initiale des mâchoires 4, 5, pendant que le ressort de compression 7 ramène les poignées 2, 3 en position initiale. La figure 4D illustre le retour en position initiale, le câble électrique dénudé 70 pouvant être retiré de la pince.

Ce mécanisme de blocage 10 original et simple à réaliser permet de réaliser une fonction essentielle de la pince à dénuder 1, à savoir l'ouverture du serre-câble 46 et du couteau 55 mobiles avant le retour des mâchoires 4, 5 en position initiale pour ne pas endommager l'extrémité du câble dénudée. Les inconvénients cités en référence à l'état de la technique sont supprimés. En effet, le mouvement du doigt suiveur 12 dans la rainure à came 11 est maîtrisé et n'engendre pas de frottement néfaste. Le ressort de rappel 8 des mâchoires 4, 5 n'a plus besoin d'être contraint excessivement. Et le fonctionnement du mécanisme de blocage 10 est totalement dissocié de l'effort de rappel de ce ressort, ce qui n'est pas le cas dans l'art antérieur. Les pièces composant cette nouvelle pince à dénuder 1 peuvent être facilement réalisées dans une matière plastique technique chargée en fibres de verre pour garantir une bonne résistance mécanique. Ces pièces peuvent être moulées avec ou sans insert, en contrôlant les jeux et en renforçant certaines zones. Ainsi, on obtient une pince à dénuder ayant des performances accrues et une esthétique améliorée par le choix possible des teintes et des formes.

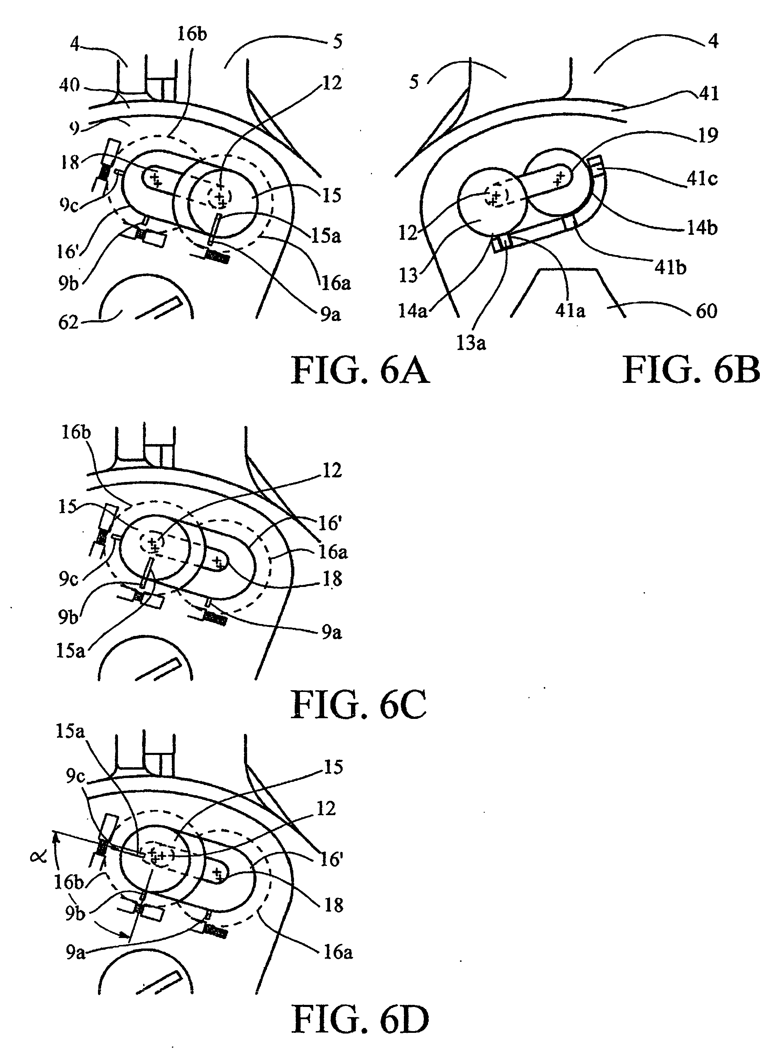

Un autre avantage de ce mécanisme de blocage 10 est qu'il permet de régler la course d'écartement des mâchoires 4, 5 de manière à pouvoir choisir la longueur du dénudage et réaliser un dénudage partiel du câble électrique. Le système de réglage est à présent décrit en référence aux figures 3 et 6A à 6D.

Le doigt suiveur 12 est constitué, dans ce cas, d'une tige traversant de part en part les mâchoires 4, 5, dont la longueur est supérieure à la largeur des mâchoires et pourvue à son extrémité arrière d'une tête cylindrique 13 logée dans une empreinte 14a correspondante prévue dans la face arrière de la joue 41 de la mâchoire 4. Ce doigt suiveur 12 comporte à son extrémité avant un bouton 15 en forme de chapeau pourvu d'une collerette 15' logée dans une empreinte 16a correspondante prévue à l'arrière du plastron 9, ce bouton étant saillant sur la face avant du plastron 9 et sollicité par un ressort de rappel 17 en appui sur la joue avant 40 de la mâchoire 4. Le plastron 9 comporte deux empreintes 16a et 16b reliées par une rainure oblongue 16'. La joue avant 40 comporte une lumière 18 pour le passage du doigt suiveur 12. Dans la joue 41 de la mâchoire 4, s'inscrit une lumière 19 pour le passage du doigt suiveur 12 en correspondance de la lumière 18 et deux empreintes cylindriques 14a et 14b en correspondance des deux empreintes 16a et 16b. Ainsi, il est possible de déplacer le doigt suiveur 12 entre deux positions extrêmes délimitées par les empreintes 14a, 14b et 16a, 16b. Ce détail de construction est représenté par les figures 6A et 6B respectivement en vues de face et de dos.

Pour déplacer le doigt suiveur 12, l'opérateur appuie avec son doigt sur le bouton 15 pour dégager la tête cylindrique 13 de la première empreinte 14a et le faire coulisser dans les lumières 18, 19 d'une position extrême à l'autre. En relâchant le bouton 15, le ressort de rappel 17 repousse le bouton 15 à l'extérieur du plastron 9 en positionnant la tête cylindrique 13 dans la deuxième empreinte 14b.

Le bouton 15 porte un repère 15a et le plastron 9 porte également trois repères 9a, 9b, 9c associés à des dessins illustrant la longueur de dénudage choisie. Au dos de la pince, la tête cylindrique 13 comporte un téton saillant 13a et la joue 41 comporte trois encoches 41a, 41b, 41c en correspondance des repères 9a, 9b, 9c prévus sur le plastron 9.

En position de dénudage total, le doigt suiveur 12 est positionné du côté droit de la lumière 18, le repère 15a est face au repère 9a et le téton 13a est dans l'encoche 41a. Cette position correspond aux figures 6A et 6B. Le fonctionnement de la pince à dénuder 1 ainsi réglée est déjà décrit et détaillé en référence aux figures 4A à 4D.

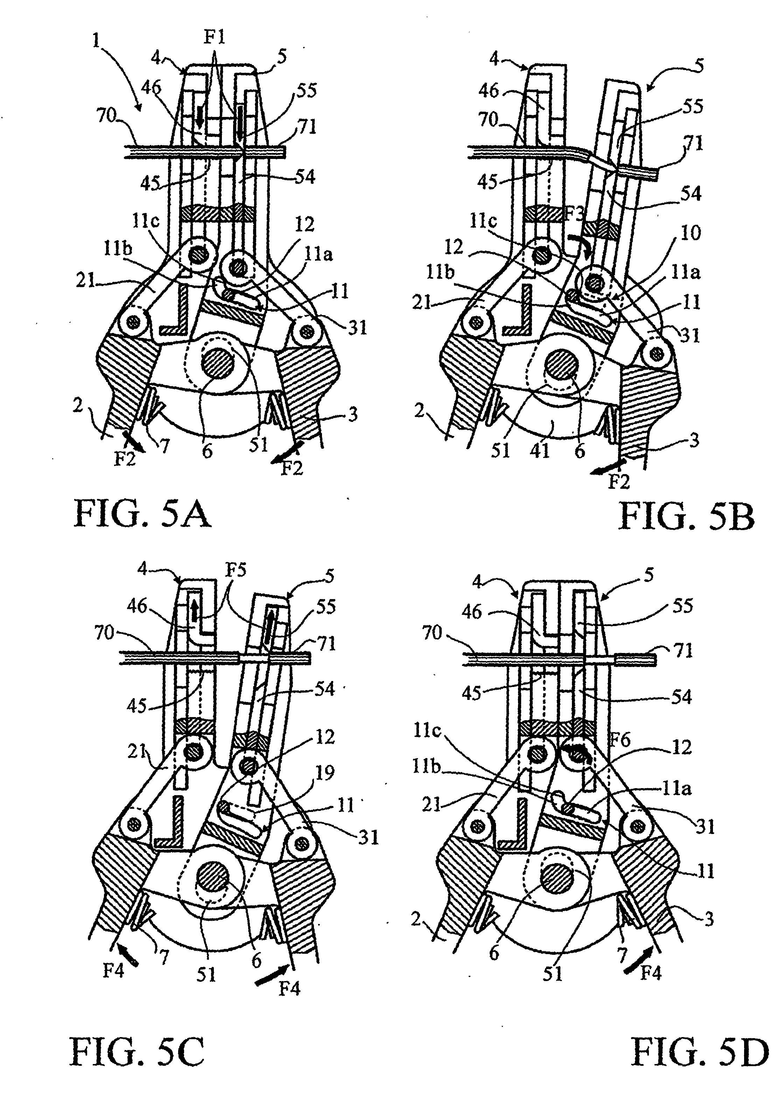

En position de dénudage partiel court, le doigt suiveur 12 est positionné du côté gauche de la lumière 18, le repère 15a est face au repère 9b et le téton 13a est dans l'encoche 41b. Cette position correspond à la figure 6C ainsi qu'aux figures 5A à 5D qui illustrent le fonctionnement de la pince. Ce fonctionnement est similaire à celui décrit en référence aux figures 4A à 4D. La différence réside uniquement dans la course d'écartement des mâchoires 4, 5 qui est beaucoup plus courte et de ce fait ne provoque qu'un dénudage partiel du câble électrique. Cette course est limitée puisque, en position initiale de la pince à dénuder 1, le doigt suiveur 12 est déplacé par rapport à la rainure à came 11 et rapproché du tronçon coudé 11b et de la butée radiale 11c.

La pince à dénuder 1 permet également d'obtenir un dénudage partiel long. Dans cette position, le doigt suiveur 12 est positionné du côté gauche de la lumière 18, le repère 15a est face au repère 9c et le téton 13a est dans l'encoche 41c. Cette position correspond à la figure 6D et est obtenue grâce au décentrage du doigt suiveur 12 par rapport à sa tête cylindrique 13 et à son bouton 15. De ce fait, en le tournant d'un angle α, égal à 90° dans l'exemple illustré, le doigt suiveur 12 est décalé par rapport à la position extrême de la figure 6C. Le fonctionnement de la pince dans cette position est identique aux deux autres positions.

Il ressort clairement de cette description que l'invention permet d'atteindre tous les buts fixés et notamment d'obtenir une pince à dénuder plus fiable, plus aisée à manipuler, d'une esthétique améliorée et autorisant plusieurs longueurs de dénudage, au moyen de mécanismes simples, économiques et sûrs.

La présente invention n'est pas limitée à l'exemple de réalisation décrit mais s'étend à toute modification et variante évidentes pour un homme du métier. Notamment, la liaison par came peut être prévue sur la mâchoire 4 du serre-câble. La pince à dénuder selon l'invention peut bien entendu est réalisée avec ou sans le système de réglage de la position du doigt suiveur par rapport à la rainure à came selon que l'utilisateur souhaite ou non différentes longueurs de dénudage.

## Revendications

1. Pince à dénuder (1) les câbles électriques comportant une paire de poignées (2, 3) divergentes et une paire de mâchoires (4, 5) adjacentes, les poignées et les mâchoires étant articulées à leur point de convergence autour d'un axe (6) de manière à écarter les mâchoires quand les poignées sont rapprochées et inversement pour replacer la pince dans sa position initiale, une (4) des mâchoires comportant un serre-câble mobile (46) et l'autre mâchoire (5) comportant un couteau mobile (55), le serre-câble (46) et le couteau (55) mobiles étant guidés en translation dans leur mâchoire (4, 5) respective entre une position ouverte et une position fermée et reliés à leur poignée (2,3) respective au moyen d'une biellette (21, 31) articulée, les poignées (2, 3) et les mâchoires (4, 5) étant sollicitées dans leur position initiale respectivement par un ressort de compression (7) et un ressort de torsion (8), ladite pince (1) comportant également des moyens de blocage (10) des mâchoires (4, 5) en position écartée tant que le serre-câble (46) et le couteau (55) mobiles ne sont pas revenus en position ouverte, **caractérisée en ce qu'**une des mâchoires (4, 5) est agencée pour être mobile en translation par rapport à l'autre mâchoire et **en ce que** lesdits moyens de blocage (10) comportent au moins une liaison par came (11, 12) entre les deux mâchoires et une butée radiale (11c), la liaison par came étant agencée pour déplacer en translation ladite mâchoire mobile quand les deux mâchoires sont en position écartée et la butée radiale étant agencée pour bloquer lesdites mâchoires en position écartée.

2. Pince à dénuder selon la revendication 1, **caractérisée en ce que** la liaison par came comporte au moins une rainure à came (11) prévue dans une des mâchoires agencée pour recevoir un doigt suiveur (12) solidaire de l'autre mâchoire et **en ce que** la mâchoire mobile en translation comporte un trou oblong (51) pour le passage dudit axe d'articulation (6).

3. Pince à dénuder selon la revendication 2, **caractérisée en ce que** la rainure à came (11) comporte deux tronçons, un tronçon circulaire (11a) s'étendant sur un secteur angulaire centré sur l'axe d'articulation (6) et correspondant au début de la course d'écartement des mâchoires, suivi d'un tronçon coudé (11b) s'éloignant dudit axe d'articulation (6) et correspondant à la fin de la course d'écartement des mâchoires et au déplacement en translation de ladite mâchoire mobile.

4. Pince à dénuder selon la revendication 3, **caractérisée en ce que** la butée radiale (11c) est intégrée à la liaison par came (11,12).

5. Pince à dénuder selon la revendication 4, **caractérisée en ce que** le tronçon coudé (11b) comporte une paroi radiale située dans un plan passant par l'axe d'articulation (6) et formant ladite butée radiale (11c) agencée pour coopérer avec ledit doigt suiveur (12).

6. Pince à dénuder selon la revendication 2, **caractérisée en ce que** le doigt suiveur (12) est solidaire de la mâchoire fixe en translation, parallèle audit axe d'articulation (6) et agencé pour être mobile en translation par rapport à cette mâchoire de manière à pouvoir modifier sa position dans ladite rainure à came (11) et régler la course des mâchoires (4, 5).

7. Pince à dénuder selon les revendications 3 et 6, **caractérisée en ce que** la mâchoire fixe en translation comporte au moins une lumière (18, 19) dans laquelle est monté ledit doigt suiveur (12), cette lumière s'étendant sur un secteur de longueur sensiblement égal à celle du tronçon circulaire (11a) de la rainure à came.

8. Pince à dénuder selon la revendication 7, **caractérisée en ce que** le doigt suiveur (12) est constitué d'une tige traversant de part en part ladite mâchoire fixe en translation, cette tige ayant une longueur supérieure à l'épaisseur de cette mâchoire et étant agencée pour se déplacer axialement par rapport à cette mâchoire.

9. Pince à dénuder selon la revendication 8, **caractérisée en ce que** le doigt suiveur (12) comporte à ses extrémités une tête (13) et un bouton (15), un ressort de rappel (17) étant disposé coaxialement à ladite tige entre ladite mâchoire et le bouton.

10. Pince à dénuder selon la revendication 9, **caractérisée en ce que** la mâchoire fixe en translation comporte au moins une première empreinte (14a, 16a) pour recevoir ladite tête (13) ou ledit bouton (15) du doigt suiveur (12), cette première empreinte étant agencée pour définir une première position fixe dudit doigt suiveur par rapport à ladite rainure à came (11), cette première position fixe correspondant à la course totale des mâchoires (4, 5) pour dénuder totalement un câble électrique.

11. Pince à dénuder selon la revendication 10, **caractérisée en ce que** ladite mâchoire fixe en translation comporte au moins une deuxième empreinte (14b, 16b) distante de la première d'un entraxe au plus égal à celui de la lumière (18, 19) dans laquelle circule ledit doigt suiveur (12), cette deuxième empreinte définissant une deuxième position fixe du doigt suiveur par rapport à ladite rainure à came (11) correspondant à une course partielle des mâchoires (4, 5) pour dénuder partiellement un câble électrique.

12. Pince à dénuder selon la revendication 11, **caractérisée en ce que** le doigt suiveur (12) est décalé axialement par rapport à sa tête (13) et son bouton (15) de sorte qu'une rotation sur lui-même d'un angle α, quand il est placé dans au moins une des deux positions fixes, crée au moins une troisième position fixe du doigt suiveur (12) par rapport à ladite rainure à came (11) correspondant à une autre course partielle desdites mâchoires.

13. Pince à dénuder selon la revendication 12, **caractérisée en ce que** la tête (13) du doigt suiveur (12) comporte un téton (13a) saillant et **en ce que** la mâchoire fixe en translation comporte au moins deux encoches (41a, 41b, 41c) pour recevoir ledit téton et correspondant au moins auxdites deux positions fixes.

14. Pince à dénuder selon l'une quelconque des revendications précédentes, **caractérisée en ce qu'**elle comporte un plastron (9) agencé pour terminer esthétiquement l'avant de la pince (1) en se superposant à l'axe d'articulation (6), au doigt suiveur (12) et au ressort de torsion (8) des mâchoires (4,5).

15. Pince à dénuder selon les revendications 13 et 14, **caractérisée en ce que** le plastron (9) comporte une empreinte oblongue (16') pour recevoir ledit bouton (15) et des repères (9a, 9b, 9c) coopérant avec un repère (15a) prévu sur ledit bouton pour repérer lesdites positions fixes dudit doigt suiveur (12) et lesdites longueurs de dénudage de la pince.

## Patentansprüche

1. Zange (1) zum Abisolieren elektrischer Kabel mit einem Paar auseinanderlaufender Griffe (2, 3) und einem Paar benachbarter Backen (4, 5), wobei die Griffe und die Backen an ihrem Konvergenzpunkt um eine Achse (6) angelenkt sind, derart, dass die Backen gespreizt werden, wenn die Griffe einander genähert werden und umgekehrt, um die Zange in ihre Ausgangsposition zarückzubringen, wobei eine (4) der Backen eine bewegliche Kabelklemme (46) und die andere Backe (5) ein bewegliches Messer (55) enthält, wobei die bewegliche Kabelklemme (46) und das bewegliche Messer (55) in ihrer jeweiligen Backe (4, 5) zwischen einer geöffneten Position und einer geschlossenen Position verschiebbar gefuhrt sind und mittels eines gelenkigen Schwingarms (21, 31) mit ihrem jeweiligen Griff (2, 3) verbunden sind, wobei die Griffe (2, 3) und die Backen (4, 5) in ihrer Ausgangsposition durch eine Kompressionsfeder (7) bzw. eine Torsionsfeder (8) belastet werden, wobei die genannte Zange (1) auch Mittel (10) enthält, um die Backen (4, 5) solange in der gespreizten Position zu blockieren wie die bewegliche Kabelklemme (46) und das bewegliche Messer (55) nicht in die geöffnete Position zurückgekehrt sind, **dadurch gekennzeichnet, dass** eine der Backen (4, 5) angeordnet ist, um gegenüber der anderen Backe verschiebebeweglich zu sein und dadurch, dass die genannten Blockiermittel (10) wenigstens eine Nockenverbindung (11, 12) zwischen den beiden Backen und einen radialen Anschlag (11c) enthalten, wobei die Nockenverbindung angeordnet ist, um die genannte bewegliche Backe zu verschieben, wenn sich die beiden Backen in der gespreizten Position befinden und wobei der radiale Anschlag angeordnet ist, um die genannten Backen in der gespreizten Position zu blockieren.

2. Abisolierzange nach Anspruch 1, **dadurch gekennzeichnet, dass** die Nockenverbindung wenigstens eine Nockennute (11) aufweist, die in einer der Backen vorgesehen ist, welche angeordnet ist, um einen mit der anderen Backe fest verbundenen Folgefinger (12) aufzunehmen, und dass die verschiebebewegliche Backe ein Langloch (51) für den Durchgang der genannten Gelenkachse (6) enthält.

3. Abisolierzange nach Anspruch 2, **dadurch gekennzeichnet, dass** die Nockennute (11) zwei Abschnitte enthält, wobei ein kreisförmig gekrümmter Abschnitt (11a) sich über einen um die Gelenkachse (6) angeordneten Winkelbereich erstreckt und dem Anfang des Spreizweges der Backen entspricht, gefolgt von einem gebogenen Abschnitt (11b), der sich von der genannten Gelenkachse (6) entfernt und dem Ende des Spreizweges der Backen sowie der Verschiebebewegung der genannten beweglichen Backe entspricht.

4. Abisolierzange nach Anspruch 3, **dadurch gekennzeichnet, dass** der radiale Anschlag (11c) in die Nockenverbindung (11, 12) integriert ist.

5. Abisolierzange nach Anspruch 4, **dadurch gekennzeichnet, dass** der gebogene Abschnitt (11b) eine radiale Wand enthält, welche in einer durch die Gelenkachse (6) verlaufenden Ebene gelegen ist und den genannten radialen Anschlag (11c) bildet, welcher angeordnet ist, um mit dem genannten Folgefinger (12) zusammenzuwirken.

6. Abisolierzange nach Anspruch 2, **dadurch gekennzeichnet, dass** der Folgefinger (12) mit der verschiebefesten Backe fest verbunden ist, zu der genannten Gelenkachse (6) parallel verläuft und angeordnet ist, um gegenüber dieser Backe verschiebebeweglich zu sein, so dass seine Position in der genannten Nockennute (11) verändert und der Weg der Backen (4, 5) eingestellt werden kann.

7. Abisolierzange nach den Ansprüchen 3 und 6, **dadurch gekennzeichnet, dass** die verschiebefeste Backe wenigstens ein Langloch (18, 19) enthält, in dem der genannte Folgefinger (12) angebracht ist, wobei sich dieses Langloch über einen Bereich erstreckt, der eine Länge aufweist, welche im Wesentlichen gleich der des kreisförmig gekrümmten Abschnittes (11a) der Nockennute ist.

8. Abisolierzange nach Anspruch 7, **dadurch gekennzeichnet, dass** der Folgefinger (12) von einem die genannte verschiebefeste Backe vollkommen durchquerenden Stift gebildet ist, wobei dieser Stift eine Länge aufweist, welche größer ist als die Dicke dieser Backe und angeordnet ist, um sich gegenüber dieser Backe axial zu bewegen.

9. Abisolierzange nach Anspruch 8, **dadurch gekennzeichnet, dass** der Folgefinger (12) an seinen Enden einen Kopf (13) und einen Knopf (15) enthält, wobei eine Rückstellfeder (17) koaxial zu dem genannten Stift zwischen der genannten Backe und dem Knopf angeordnet ist.

10. Abisolierzange nach Anspruch 9, **dadurch gekennzeichnet, dass** die verschiebefeste Backe wenigstens eine erste Vertiefung (14a, 16a) zur Aufnahme des genannten Kopfes (13) oder des genannten Knopfes (15) des Folgefingers (12) enthält, wobei diese erste Vertiefung angeordnet ist, um eine erste feste Position des genannten Folgefingers gegenüber der genannten Nockennute (11) festzulegen, wobei diese erste feste Position dem Gesamtweg der Backen (4, 5) zum vollständigen Abisolieren eines elektrischen Kabels entspricht.

11. Abisolierzange nach Anspruch 10, **dadurch gekennzeichnet, dass** die genannte verschiebefeste Backe wenigstens eine zweite Vertiefung (14b, 16b) enthält, die von der ersten um einen Mittenabstand entfernt ist, der dem des Langlochs (18, 19), in dem der genannte Folgefinger (12) läuft, möglichst gleich ist, wobei diese zweite Vertiefung eine zweite feste Position des Folgefingers gegenüber der genannten Nockennute (11) festlegt, die einer Teilstrecke der Backen (4, 5) zum teilweisen Abisolieren eines elektrischen Kabels entspricht.

12. Abisolierzange nach Anspruch 11, **dadurch gekennzeichnet, dass** der Folgefinger (12) gegenüber seinem Kopf (13) und seinem Knopf (15) axial versetzt ist, so dass dann, wenn er sich in wenigstens einer der beiden festen Positionen befindet, eine Drehung um sich selbst um einen Winkel α wenigstens eine dritte feste Position des Folgefingers (12) gegenüber der genannten Nockennute (11) schafft, die einer weiteren Teilstrecke der genannten Backen entspricht.

13. Abisolierzange nach Anspruch 12, **dadurch gekennzeichnet, dass** der Kopf (13) des Folgefingers (12) einen vorspringenden Ansatz (13a) aufweist und dass die verschiebefeste Backe wenigstens zwei Nuten (41a, 41b, 41c) zur Aufnahme des genannten Ansatzes enthält, die wenigstens den genannten zwei festen Positionen entsprechen.

14. Abisolierzange nach irgendeinem der vorhergehenden Ansprüche, **dadurch gekennzeichnet, dass** sie eine Deckplatte (9) enthält, die angeordnet ist, um das Vorderteil der Zange (1) ästhetisch abzuschließen, indem sie die Gelenkachse (6), den Folgefinger (12) und die Torsionsfeder (8) der Backen (4,5) überdeckt.

15. Abisolierzange nach den Ansprüchen 13 und 14, **dadurch gekennzeichnet, dass** die Deckplatte (9) eine längliche Vertiefung (16') zur Aufnahme des genannten Knopfes (15) sowie Markierungen (9a, 9b, 9c) aufweist, die mit einer Markierung (15a) zusammenwirken, welche an dem genannten Knopf vorgesehen ist, um die genannten festen Positionen des Folgefingers (12) und die genannten Abisolierlängen der Zange erkennen zu können.

## Claims

1. Stripping pliers (1) for electric cables comprssing a pair of divergent handles (2, 3) and a pair of adjacent jaws (4, 5), the handles and the jaws being hinged at their convergence point around a pin (6) so as to separate the jaws when the handles are moved closer and inversely to replace the pliers in their initial position, one (4) of the jaws comprising a mobile cable clamp (46) and the other jaw (5) comprising a mobile knife (55), the cable clamp (46) and the knife (55) being guided in translational motion in their respective jaw (4, 5) between an open position and a closed position and connected to their respective handle (2, 3) by means of a hinged connecting rod (21, 31), the handles (2, 3) and the jaws (4, 5) being stressed in their initial position respectively by a compression spring (7) and a torsion spring (8), the said pliers (1) also comprising means (10) for locking the jaws (4, 5) in the separated position as long as the cable clamp (46) and the knife (55) have not returned to the open position, **characterised in that** one of the jaws (4, 5) is designed to be mobile in translation in relation to the other jaw and **in that** the said locking means (10) comprise at least one cam coupling (11, 12) between the two jaws and a radial stop (11c), the cam coupling being designed to move the said moving jaw in translational motion when the two jaws are in the separated position and the radial stop being designed to lock the said jaws in the separated position.

2. Stripping pliers according to Claim 1, **characterised in that** the cam coupling comprises at least one guide groove (11) provided in one of the jaws designed to receive a follower pin (12) integral with the other jaw and **in that** the jaw mobile in translation comprises an oblong hole (51) for the passage of the said hinge pin (6).

3. Stripping pliers according to Claim 2, **characterised in that** the guide groove (11) comprises two sections, a circular section (11a) extending over an angular sector centred on the hinge pin (6) and corresponding to the start of the separating travel of the jaws, followed by a bent section (11b) situated remote from the said hinge pin (6) and corresponding to the end of the separating travel of the jaws and to the translational motion of the said mobile jaw.

4. Stripping pliers according to Claim 3, **characterised in that** the radial stop (11c is integrated into the cam coupling (11, 12).

5. Stripping pliers according to Claim 4, **characterised in that** the bent section (11b) comprises a radial wall situated in a plane passing through the hinge pin (6) and forming the said radial stop (11c) designed to cooperate with the said follower pin (12).

6. Stripping pliers according to Claim 2, **characterised in that** the follower pin (12) is integral with the jaw fixed in translation, parallel to the said hinge pin (6) and designed to be mobile in translation in relation to this jaw so as to be able to modify its position in the said guide groove (11) and to control the travel of the jaws (4, 5).

7. Stripping pliers according to Claims 3 and 6, **characterised in that** the jaw fixed in translation comprises at least one slot (18, 19) in which is mounted the said follower pin (12), this slot extending over a sector having a length substantially equal to that of the circular section (11a) of the guide groove.

8. Stripping pliers according to Claim 7, **characterised in that** the follower pin (12) is formed by a rod passing on either side of the said jaw fixed in translation, this rod having a length greater than the thickness of this jaw and being designed to move axially in relation to this jaw.

9. Stripping pliers according to Claim 8, **characterised in that** the follower pin (12) comprises at its ends a head (13) and a knob (15), a return spring (17) being disposed coaxially to the said rod between the said jaw and the knob.

10. Stripping pliers according to Claim 9, **characterised in that** the jaw fixed in translation comprises at least a first recess (14a, 16a) to receive the said head (13) or the said knob (15) of the follower pin (12), this first recess being designed to define a first fixed position of the said follower pin in relation to the said cam groove (11), this first fixed position corresponding to the total travel of the jaws (4, 5) to strip totally an electric cable.

11. Stripping pliers according to Claim 10, **characterised in that** the said jaw fixed in translation comprise at least a second recess (14b, 16b) spaced from the first by a distance at most equal to that of the slot (18, 19) in which the said follower pin (12) moves, this second recess defining a second fixed position of the follower pin in relation to the said guide groove (11) corresponding to a partial travel of the jaws (4, 5) to partially strip an electric cable.

12. Stripping pliers according to Claim 11, **characterised in that** the follower pin (12) is axially shifted in relation to its head (13) and its knob (15) so that a rotation on itself by an angle α, when it is placed in at least one of the two fixed positions, creates at least a third fixed position of the follower pin (12) in relation to the said guide slot (11) corresponding to another partial travel of the said jaws.

13. Stripping pliers according to Claim 12, **characterised in that** the head (13) of the follower pin (12) comprises a projecting stud (13a) and **in that** the jaw fixed in translational motion comprises at least two notches (41a, 41b, 41c) to receive the said stud and corresponding at least to the said two fixed positions.

14. Stripping pliers according to any one of the preceding Claims, **characterised in that** it comprises a front cover (9) designed to end aesthetically the front of the pliers (I) by being superimposed upon the hinge pin (6), the follower pin (12) and the torsion spring (8) of the jaws (4, 5).

15. Stripping jaws according to Claims 13 and 14, **characterised in that** the front cover (9) comprises an oblong recess (16') to receive the said knob (15) and markers (9a, 9b, 9c) cooperating with a marker (15a) provided on the said knob to mark the said fixed positions of the said follower pin (12) and the said stripping lengths of the pliers.
